# EUROPÄISCHE PATENTANMELDUNG

(11) **EP 3 262 914 A1**
(43) Veröffentlichungstag der Anmeldung: **03.01.2018**
(21) Anmeldenummer: 17401064.5
(22) Anmeldetag: 27.06.2017
(51) Int. Cl.: A01C 21/00, A01C 17/00

(54) **STEUERSYSTEM UND VERFAHREN ZUR STEUERUNG DER VERTEILCHARAKTERISTIK EINES SCHLEUDERSTREUERS**

(30) Priorität: 01.07.2016 DE 102016112080; 02.01.2017 DE 102017100008
(71) Anmelder: Amazonen-Werke H. Dreyer GmbH & Co. KG, 49205 Hasbergen (DE)
(72) Erfinder: Kielhorn, Arnd, 49090 Osnabrück (DE); Sia, Tim-Randy, 49179 Ostercappeln (DE); Große Brinkhaus, Andre, 48149 Münster (DE)

(57) **Zusammenfassung**

Steuersystem zur Steuerung eines Schleuderstreuers zur Ausbringung von landwirtschaftlichem Gut, vorzugsweise Dünger, wobei die Position des Schleuderstreuers durch Zugriff auf ein Positionserfassungssystem durch das Steuersystem ermittelbar ist, wobei Bearbeitungskarten an das Steuersystem übergebbar und/oder durch dieses auslesbar sind, wobei die Bearbeitungskarten die ortsspezifischen Sollausbringmengen (A, B) umfassen, wobei der Streubereich der beiden Schleuderscheiben jeweils in zumindest zwei Bereiche (9) unterteilt ist, für welche die Ausbringmenge durch das Steuersystem zumindest annähernd individuell einstellbar ist, wobei die Position der Bereiche relativ zu dem Positionserfassungssystem in dem Steuersystem hinterlegt ist, wobei Einstellparameter zur Einstellung der Verteilcharakteristik des Schleuderstreuers, vorzugsweise die momentane Dosierschieberposition und/oder der momentane Aufgabepunkt und/oder die momentane Schleuderscheibendrehzahl, jeweils pro Schleuderscheibe in Abhängigkeit der an der aktuellen oder in Kürze erreichten Position der Bereiche in der Bearbeitungskarte hinterlegten Sollausbringmengen durch das Steuersystem berechnet werden.

## Beschreibung

Die Erfindung betrifft ein Steuersystem zur Steuerung eines Schleuderstreuers gemäß dem Oberbegriff des Patentanspruches 1 sowie ein Verfahren zur Steuerung eines Schleuderstreuers.

Die EP 1 695 605 B1 beschreibt, die in einer Bearbeitungskarte hinterlegten Sollwerte für die Ausbringmenge hinsichtlich der zu erwartenden tatsächlichen aktuellen Lage des Streufächers bei einem Schleuderstreuer für die Einstellung der Einstellparameter des Schleuderstreuers zu verwenden. Dies wird dadurch erreicht, dass ein Sollwert ausgewählt wird, welcher sich zu dem jeweiligen Zeitpunkt an dem zu erwartenden Ort des Streufächers befindet, welcher dann für die Berechnung der Einstellparameter verwendet wird.

Aus dem zunehmenden Bedarf in der Landtechnik nach Präzisierung und somit auch optimaler Bestimmung der Einstellparameter für Schleuderstreuer folgt jedoch die Forderung nach einer weiteren Optimierung der Verteilung entsprechend der Gegebenheiten am Ort des Streufächers des Schleuderstreuers. Hierbei wird die Berücksichtigung von lediglich einem Sollwert am Ort des Streufächers oder je eines Sollwertes pro Streuscheibe des Streufächers als ungenügend wahrgenommen.

Aufgabe der vorliegenden Erfindung ist es also ein Steuersystem und ein Verfahren zur verbesserten Anpassung des Streufächers an die örtlichen Gegebenheiten und Anforderungen bezüglich der Verteilung des Streugutes anzugeben.

Diese Aufgabe wird gelöst durch den kennzeichnenden Teil des Anspruchs 1. Es werden die Streubereiche der beiden Schleuderscheiben jeweils in zumindest zwei Bereiche unterteilt, wie beispielsweise in der EP 2 798 929 B1 offenbart. Die relative Lage der Bereiche zu einem dem Schleuderstreuer zugeordneten Positionserfassungssystem ist in dem Steuersystem hinterlegt oder durch dieses ermittelbar. Zudem ist die Ausbringmenge durch das Steuersystem zumindest annähernd individuell einstellbar. Dies bedeutet, dass die Ausbringmenge durch Anpassung der Einstellparameter durch das Steuersystem, wie beispielsweise Drehzahl der Schleuderscheibe, Aufgabepunkt des Verteilguts, beispielsweise Düngers, auf die Schleuderscheibe, Dosierschieberöffnung in der Weise regelbar ist, dass in den entsprechenden Bereichen zumindest annähernd die gewünschte Menge Dünger ausgebracht wird.

Erfindungsgemäß werden nun die Einstellparameter zur Einstellung der Verteilcharakteristik des Schleuderstreuers, vorzugsweise die momentane Dosierschieberposition und/oder der momentane Aufgabepunkt des Streugutes auf die jeweilige Schleuderscheibe und/oder die momentane Schleuderscheibendrehzahl, jeweils pro Schleuderscheibe in Abhängigkeit der an der aktuellen oder in Kürze erreichten Position der Bereiche in der Bearbeitungskarte hinterlegten Sollausbringmengen durch das Steuersystem berechnet. Es wird also mit anderen Worten die derzeitige Position der Bereiche bestimmt und die in den Bereichen auszubringende Menge Dünger aus der in dem Steuersystem hinterlegten Bearbeitungskarte abgerufen. Das Steuersystem ist nun derart ausgebildet, dass mittels interner Berechnungsvorschriften die Einstellparameter derart eingestellt werden, dass zumindest annähernd die gewünschte Ausbringmenge in dem jeweiligen Bereich ausgebracht wird.

Zur Ermittlung der Berechnungsvorschriften werden für den jeweiligen Schleuderstreuer, die jeweilige Schleuderschaufel und den jeweiligen Dünger Streuversuche unternommen und/oder simuliert und hieraus die Einstellparameter generiert. Die so ermittelten Berechnungsvorschriften werden dann in dem Steuersystem gespeichert oder können auch manuell in dieses eingegeben werden.

Die Berechnung der Einstellempfehlungen findet hierbei jeweils für die aktuelle Position der Bereiche statt bzw. für eine Position, welche die Bereiche in Kürze einnehmen werden. Hierbei ist nämlich zu berücksichtigen, dass die Einstellung des Schleuderstreuers, also ggf. die Anpassung der Dosierschieröffnung, des Aufgabepunktes oder der Schleuderscheibendrehzahl sowie der Verteilvorgang selbst einige Zeit in Anspruch nehmen. Der Zeitraum von der Berechnung der Einstellparameter bis die Änderung der Einstellempfehlungen sich in einer veränderten Ausbringrate auf der zu bearbeitenden Fläche auswirkt ist idealerweise durch das Steuersystem berücksichtigbar. Diese Prognose kann von dem Steuersystem in Abhängigkeit der momentanen Geschwindigkeit des Schleuderstreuers und/oder dem derzeitigen Kurs ermittelt werden. Auch können in der Bearbeitungskarte hinterlegte Fahrspuren für die Prognose berücksichtigt werden.

Das Steuersystem kann vorzugsweise als Jobrechner an dem Schleuderstreuer oder dem den Schleuderstreuer ziehenden oder tragenden Traktor oder als Terminal ausgebildet sein, welches an dem Traktor oder dem Schleuderstreuer verbaut ist. Auch kann das Steuersystem ein Terminal und einen Jobrechner umfassen, welche in Kommunikationsverbindung stehen.

Die Berechnung der Einstellparameter kann von zusätzlichen Parametern abhängen, so kann beispielsweise durch das Steuersystem oder den jeweiligen Benutzer eine Arbeitsbreite vorgegeben werden. Entsprechend der vorgegebenen Arbeitsbreite werden dann die Positionen der Bereiche der jeweiligen Schleuderscheibe durch das Steuersystem ermittelt. Auch kann die Anzahl der anzulegenden Bereiche manuell eingegeben oder automatisch durch das Steuersystem vorgegeben sein.

In einer vorteilhaften Weiterbildung der Erfindung werden die Sollausbringmengen an den aktuellen Positionen der jeweiligen Bereiche aus der Bearbeitungskarte durch das Steuersystem ausgelesen und mittels eines in dem Steuersystem hinterlegten Algorithmus, vorzugsweise Mittelwertbildung, die Sollausbringmengen an den Positionen der jeweiligen Bereiche pro Schleuderscheibe durch das Steuersystem zur Berechnung der Einstellparameter kombiniert. Dies sorgt für eine besonders vorteilhafte und homogene Verteilung des auszubringenden Guts. Es kann beispielsweise vorkommen, dass der Streufächer der beiden Schleuderscheiben in jeweils drei Bereiche unterteilt ist. Der Streufächer mag sich nun an einer Position befinden an der für die als nächstes zu berechnende Einstellempfehlung dem äußersten Bereich eine Ausbringmenge A und dem innersten Bereich eine Ausbringmenge B zugeordnet ist. Der mittlere Bereich mag überwiegend die Sollausbringmenge A oder die Sollausbringmenge B aufweisen oder beide Sollausbringmengen A und B zu annähernd gleichen Teilen aufweisen. Um nun möglichst komfortabel die Einstellparameter des Schleuderstreuers optimal zu berechnen, kann beispielsweise vorgesehen sein, für den mittleren Bereich einen Mittelwert für die Sollausbringmenge aus den Sollwerten für den äußersten und den innersten Bereich zu berechnen. Dies gilt insbesondere, wenn der mittlere Bereich zumindest teilweise die Sollausbringmenge A und B aufweist. Zu diesem Zweck kann vorgesehen sein, dass das Steuersystem eine Mittelwertbildung oder einen sonstigen Algorithmus verwendet, um einen homogenen Übergang der Ausbringmengen der verschiedenen Bereiche zu generieren, bevor hieraus die entsprechenden Einstellparameter pro Schleuderscheibe ermittelt werden.

Auch kann vorgesehen sein, dass in entsprechenden Feldbereichen, insbesondere in der Nähe von Feldgrenzen oder wenn einer der Bereiche zumindest teilweise die Sollausbringmenge 0 aufweist, spezielle Algorithmen verwendet werden, um in diesen Bereichen kein Streugut auszubringen. Dies kann notwendig sein, um in der Nähe von Feldgrenzen, insbesondere bei angrenzenden Flüssen oder Seen, eine Belastung dieser mit Dünger zu verhindern.

In einer vorteilhaften Weiterbildung der Erfindung werden die Bereiche mit einem Gewichtungsfaktor versehen und bei der Berechnung der Einstellparameter durch das Steuersystem somit verschiedentlich gewichtet. Auf diese Weise können ausgewiesene Bereiche bei der Ermittlung der Einstellparameter bevorzugt behandelt werden, so dass die in diesem Bereich vorliegende Sollausbringmenge mit größerer Präzision eingestellt wird. Dies kann auch insbesondere gewünscht sein, wenn die in einem Bereich einzustellende Ausbringmenge 0 ist. Die Gewichtung kann mit anderen Worten also auch von der vorliegenden Sollausbringmenge abhängen.

In einer vorteilhaften Ausgestaltung der Erfindung werden zur Berechnung der Sollausbringmenge, die dem jeweiligen Bereich zugeordnet wird, alle in der Bearbeitungskarte innerhalb der aktuellen Position des Bereiches hinterlegten Werte für die Sollausbringmenge durch das Steuersystem gemittelt. In dem Fall also, dass die Sollausbringmenge in der Bearbeitungskarte so engmaschig hinterlegt ist, dass mehrere Sollausbringmengen pro Bereich durch das Steuersystem ermittelt werden, werden diese in erfindungsgemäßer Weise gemittelt, um hieraus eine mittlere Sollausbringmenge zu generieren und diese für die Ermittlung der Einstellparameter durch das Steuersystem zu verwenden. Alternativ oder zusätzlich kann auch vorgesehen sein, dass die Sollausbringmenge, die einem Bereich durch das Steuersystem zugeordnet wird, auf 0 gesetzt wird, sobald das Steuersystem ermittelt, dass zumindest eine von mehreren in der Bearbeitungskarte hinterlegten Sollausbringmengen in einem Bereich den Wert 0 hat.

Entsprechend einer vorteilhaften Weiterbildung kann vorgesehen sein, dass weitere Einstellparameter, wie die Anbauhöhe des Schleuderstreuers und/oder die Neigung des Schleuderstreuers anhand der aus der Bearbeitungskarte ermittelten Sollausbringmengen gesteuert werden. Weitere mögliche Parameter, die angepasst werden können sind beispielsweise die jeweilige Streuschaufellänge oder die Position und Konfiguration einer Grenzstreueinrichtung, wie beispielsweise eines Grenzstreuschirmes.

Die Erfindung stellt zudem ein Verfahren zur Steuerung eines Schleuderstreuers bereit, welches sich dadurch auszeichnet, dass Einstellparameter zur Einstellung der Verteilcharakteristik des Schleuderstreuers, vorzugsweise die momentane Dosierschieberposition und/oder der momentane Aufgabepunkt und/oder die momentane Schleuderscheibendrehzahl, jeweils pro Schleuderscheibe in Abhängigkeit der an der aktuellen Position der Bereiche in der Bearbeitungskarte hinterlegten Sollausbringmengen berechnet werden. Auf diese Weise können vorteilhaft die Einstellparameter an die entsprechenden Sollausbringmengen angepasst werden.

Weitere Einzelheiten der Erfindung sind den weiteren Unteransprüchen sowie der Beispielsbeschreibung zu entnehmen. Die Zeichnungen zeigen
- Fig. 1: eine Bearbeitungskarte für eine landwirtschaftliche Fläche,
- Fig. 2: eine Bearbeitungskarte für eine landwirtschaftliche Fläche mit darübergelegtem Gitternetz,
- Fig. 3: eine Bearbeitung der landwirtschaftlichen Fläche mittels eines Schleuderstreuers nach dem Stand der Technik,
- Fig. 4: eine erfindungsgemäße Bearbeitung der landwirtschaftlichen Fläche und
- Fig. 5: eine erfindungsgemäße Bearbeitung in vergrößerter Darstellung.

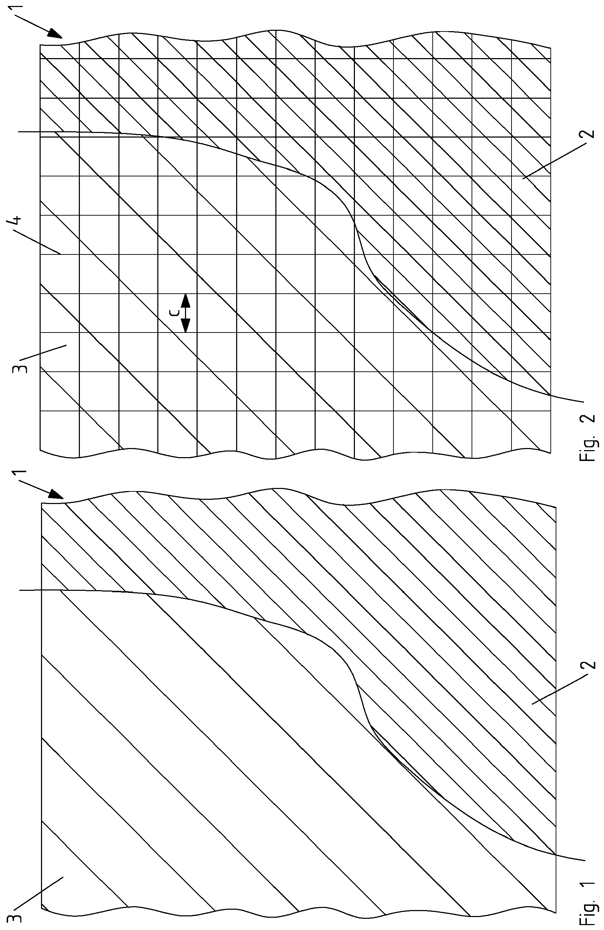

In Fig. 1 ist eine landwirtschaftliche Fläche 1 gezeigt, welche einen Bereich 2 und einen Bereich 3 mit jeweils unterschiedlicher Sollausbringmenge A (Bereich 2) und B (Bereich 3) aufweist. Diese ist jeweils dargestellt durch eine entsprechende Schraffur, wobei beispielsweise die dichtere Schraffur für eine größere Ausbringmenge pro Fläche stehen mag. Zu der landwirtschaftlichen Fläche und den gewünschten Sollausbringmengen kann nun eine Bearbeitungskarte erstellt werden, welche durch das Gitternetz 4 in Fig. 2 dargestellt ist. An den Knoten des Gitters sind hierbei jeweils die an den jeweiligen Orten vorliegenden Sollausbringmengen A oder B hinterlegt, so dass sich je nach Maschenweite C ein weiteres oder dichteres Gitternetz über die Karte der landwirtschaftlichen Fläche spannt in welchem im Abstand der Maschenweite C die jeweilige Sollausbringmenge hinterlegt ist. Die Maschenweite kann hierbei fast beliebig gewählt werden. Da die Arbeitsbreite moderner Düngerstreuer bis zu 50 m betragen kann, die Positionsbestimmung mittels moderner Positionserfassungssysteme auf der anderen Seite zentimetergenau ist und auch die Einstellung der Einstellparameter des Schleuderstreuers derart genau gewählt werden kann, dass die Verteilcharakteristik innerhalb des Schleuderstreuers sehr genau an die jeweiligen örtlichen Gegebenheiten bzw. Erfordernisse angepasst werden kann. Um die Vorteile des erfindungsgemäßen Systems möglichst effektiv zu nutzen, die Verteilcharakteristik als möglichst exakt einstellen zu können, sollte die Maschenweite möglichst klein, vorzugsweise kleiner als 10 m, besonders bevorzugt kleiner als 5 m sein. Es sind jedoch prinzipiell auch Maschenweiten von 100 m und mehr denkbar.

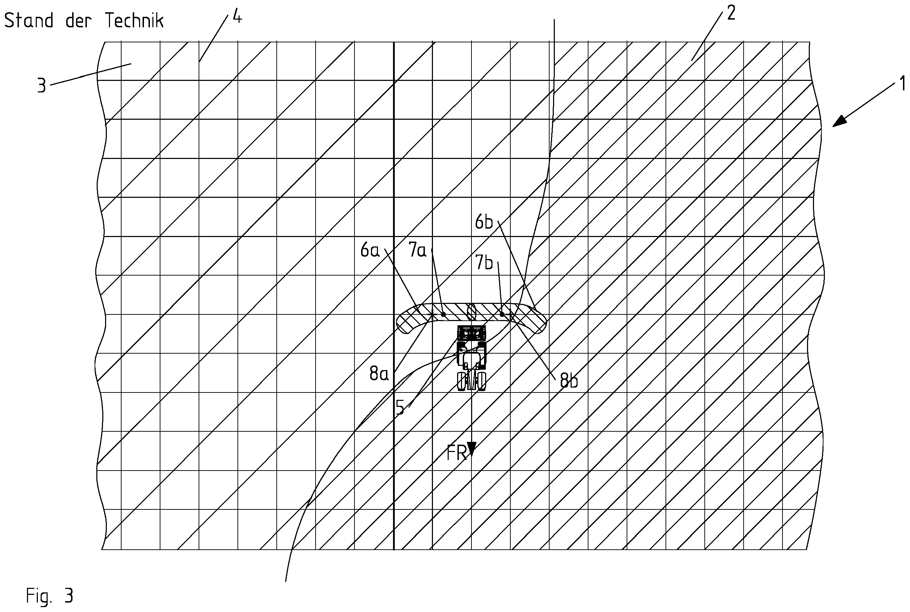

Wird nun die landwirtschaftliche Fläche 1 mit einem Düngerstreuer wie aus dem Stand der Technik bekannt, bearbeitet, so kann es insbesondere im Übergangsbereich zwischen zwei Bereichen 2, 3 mit verschiedenen Sollausbringmengen pro Fläche A, B zu Ungenauigkeiten kommen. Dies ist in Fig. 3 dargestellt. Ein Düngerstreuer 5 bearbeitet die landwirtschaftliche Fläche 1 in der durch den angezeigten Pfeil angegebenen Fahrtrichtung FR. Der in Fahrtrichtung FR gesehene rechte Teilstreufächer 6a, erzeugt durch die in Fahrtrichtung gesehen rechte Schleuderscheibe, liegt hierbei komplett im Feldbereich 3, sodass zur Ermittlung der Einstellparameter für die rechte Schleuderscheibe die Sollausbringmenge B maßgeblich ist. Dies wird im Stand der Technik beispielsweise dadurch realisiert, dass aus der Bearbeitungskarte der dem Schwerpunkt 7a des Teilstreufächers 6a nächstliegende Wert für die Sollausbringmenge für die Berechnung der Einstellparameter verwendet wird. In dem in Fig. 3 gezeigten Beispiel wäre dies beispielsweise ein Sollwert hinterlegt an der Position des Knotens 8a des Gitternetzes 4.

Bezüglich des in Fahrtrichtung FR gesehen linken Teilstreufächers 6b, erzeugt durch die in Fahrtrichtung gesehen linke Schleuderscheibe wird nun ebenfalls im Stand der Technik der dem Schwerpunkt 7b dieses Teilstreufächer nächstliegende Sollwert, hinterlegt am Knoten 8b zur Ermittlung der Einstellparameter der linken Schleuderscheibe verwendet. Dieser liegt ebenfalls im Bereich 3 der landwirtschaftlichen Fläche, so dass der linke Teilstreufächer 6b derart angesteuert wird, dass dieser insgesamt eine Ausbringmenge aufweist, die der Sollausbringmenge B am Knoten 8b entspricht, obwohl dieser Teilstreufächer annähernd zur Hälfte im Bereich 2 liegt, welcher sich durch eine gewünschte Sollausbringmenge A auszeichnet.

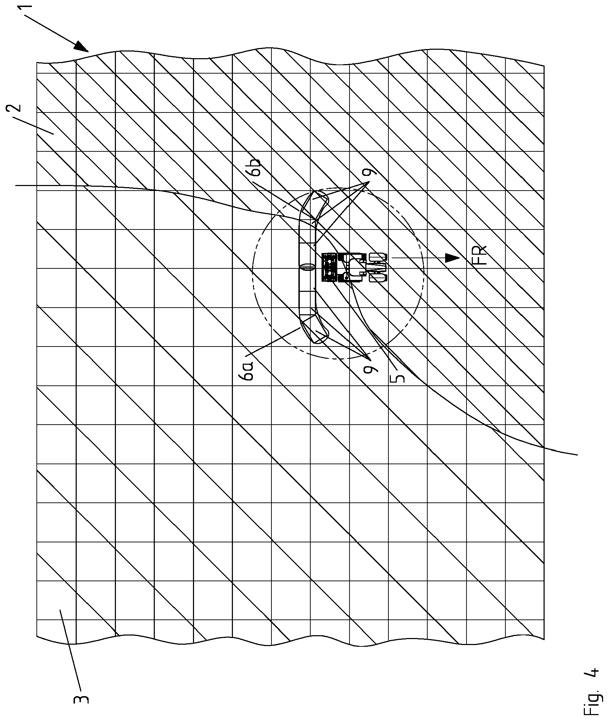

Um also eine bessere Anpassung des Streufächers an die jeweiligen örtlichen Gegebenheiten zu erreichen wird nun eine Ermittlung der Einstellparameter gemäß des erfindungsgemäßen Ausführungsbeispiels in Fig. 4 vorgeschlagen. Wiederum soll eine landwirtschaftliche Fläche 1 mittels eines Düngerstreuers 5 bearbeitet werden. Die landwirtschaftliche Fläche ist in Teilbereiche 2 und 3 unterteilt, welche sich durch unterschiedliche Sollausbringmengen A (Bereich 2) und B (Bereich 3) auszeichnen.

Es wird nun erfindungsgemäß jeder Teilstreufächer in zumindest zwei Bereiche, in diesem Ausführungsbeispiel sind es drei Bereiche 9, unterteilt. Es wird durch ein Steuersystem aus einer hinterlegten Bearbeitungskarte die dem entsprechenden Bereich zu einem gegebenen Zeitpunkt zuzuordnende Sollausbringmenge ermittelt. Hierfür wird mittels eines Positionserfassungssystems der jeweilige Ort eines jeden Bereiches 9 ermittelt. Hierbei hängt die Position der Bereiche von der tatsächlichen Position der Streufächer ab, beispielsweise von der Schleuderscheibendrehzahl. Das Steuersystem ist also ausgebildet, aus den Einstellparametern des Schleuderstreuers die Position des Streufächers relativ zur Schleuderscheibenposition zu ermitteln und hieraus wiederum die Position der jeweiligen Bereiche zu berechnen. Anschließend wird die in der Bearbeitungskarte am Ort des Bereiches jeweils hinterlegte Sollausbringmenge bestimmt. In dem vorliegenden Ausführungsbeispiel sind dies die an den Knoten des Gitternetzes 4 hinterlegten Sollausbringmengen, wobei hier jeweils ein Knoten in oder in unmittelbarer Nähe eines der Bereiche 9 zu finden ist. Sind mehrere Knoten in einem Bereich vorhanden, kann vorgesehen sein, die verschiedenen Sollausbringmengen zu mitteln. Ist kein Sollwert für die Ausbringmenge am Ort eines Bereichs hinterlegt, kann vorgesehen sein, den nächstliegenden Sollwert zu bestimmen und diesen dem Bereich zuzuordnen.

Der in Fahrtrichtung gesehen rechte Teilstreufächer 6a ist in drei Bereiche 9 unterteilt, welche sich jeweils im Feldbereich 3 befinden, so dass diesem somit also durch das Steuersystem die Sollausbringmenge B zugeordnet wird. Der Teilstreufächer wird in Reaktion durch das Steuersystem nun derart angesteuert, die Schleuderscheibendrehzahl, der Aufgabepunkt des Streugutes auf die rechte Schleuderscheibe und die Dosierschieberposition also so gewählt, dass an jeder Position des Teilstreufächers 6a die Sollausbringmenge pro Fläche B anliegt.

Demgegenüber liegt der Teilstreufächer 6b, welcher der in Fahrtrichtung gesehen linken Schleuderscheibe zugeordnet ist, Teilweise im Feldbereich 2 und teilweise im Feldbereich 3.Insbesondere liegt der in Fahrtrichtung am weitesten links gelegene Bereich des Teilstreufächers 6b vollständig im Bereich 2, während der in Fahrtrichtung gesehen rechte Bereich des Teilstreufächers 6b vollständig im Bereich 3 liegt. Das Steuersystem ist nun erfindungsgemäß derart ausgebildet, dass die Einstellparameter der in Fahrtrichtung gesehen linken Schleuderscheibe derart gewählt werden, dass dem linken Bereich des Teilstreufächers 6b eine vom rechten Bereich des Teilstreufächers 6b abweichende Ausbringmenge pro Fläche zukommt, insbesondere wird im linken Bereich zumindest annähernd die Ausbringmenge A und im rechten Bereich zumindest annähernd die Ausbringmenge B eingestellt.

Der mittlere Bereich des Teilstreufächers 6b befindet sich teilweise im Bereich 2 und Teilweise im Bereich 3, wobei der Knoten zur Ermittlung der für diesen Bereich gültigen Sollausbringmenge im Bereich 3 liegt. Es ist nun erfindungsgemäß vorgesehen, dass für den mittleren Bereich eine Mittelwertbildung für die Sollausbringmenge ermittelt wird, die zwischen der Sollausbringmenge des linken und des rechten Bereiches des Teilstreufächers 6b liegt. Alternativ kann jedoch auch vorgesehen sein einfach die dem mittleren Bereich durch den in diesem Bereich liegenden Knoten zugeordnete Sollausbringmenge B zur Ermittlung der Einstellparameter durch das Steuersystem zu verwenden und auf die Mittelwertbildung zu verzichten.

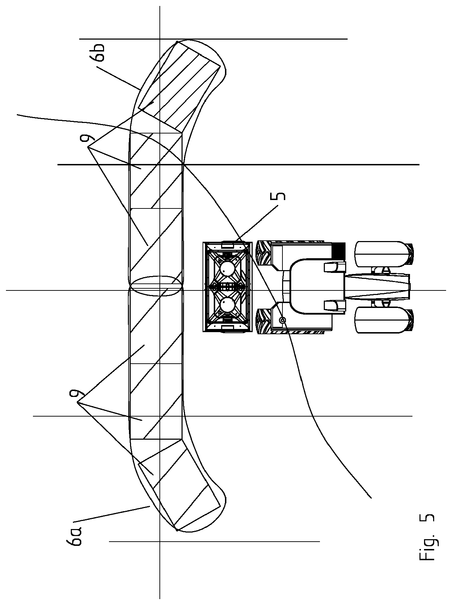

Somit ergibt sich für den in Fahrtrichtung gesehen linken Teilstreufächer 6b eine in dem Streufächer variierende tatsächliche Ausbringmenge, wie aus der jeweiligen in Fig. 5 dargestellten Schraffur der Bereiche ersichtlich. Es ergibt sich also für den in Fahrtrichtung gesehen linken Bereich des Teilstreufächers 6b eine tatsächliche Ausbringmenge pro Fläche B und für den rechten Bereich des Teilstreufächers 6b eine tatsächliche Ausbringmenge pro Fläche A. Zudem werden die Einstellparameter durch das Steuersystem derart gewählt, dass sich für den mittleren Bereich eine tatsächliche Ausbringmenge ergibt, die genau zwischen den Ausbringmengen des linken und des rechten Bereiches des Teilstreufächers 6b liegt.

Demgegenüber ist die Ausbringmenge des in Fahrtrichtung gesehen rechten Teilstreufächers 6a in Fig. 4 in allen Bereichen, wie durch die Schraffur in Fig. 5 angedeutet, gleich, da sich der Teilstreufächer 6a vollständig im Feldbereich 3 befindet.

Sind mehrere Sollwerte für die Ausbringmenge in einem Bereich hinterlegt, kann erfindungsgemäß vorgesehen sein, dass die Sollausbringmenge für diesen Bereich durch eine Mittelwertbildung verschiedener Sollwerte ermittelt wird.

Um die Einstellung des Schleuderstreuers durch das Steuersystem an die jeweiligen örtlichen Vorgaben der Bearbeitungskarte rechtzeitig anzupassen, ist insbesondere vorgesehen, dass die Regelung vorausschauend ausgebildet ist und in dem Steuersystem ein Zeitraum hinterlegt ist, welcher zwischen der Ermittlung geänderter Einstellparameter und einer geänderten Ausbringrate auf der landwirtschaftlichen Fläche vergeht.

Im Unterschied zu dem in Fig. 3 dargestellten Stand der Technik kann also erfindungsgemäß der jeweilige Streufächer einer Schleuderscheibe mit dem erfindungsgemäßen Verfahren und Steuersystem an die in einer Bearbeitungskarte hinterlegten Sollausbringmengen sehr viel präziser angepasst werden. Insbesondere kann verschiedenen Bereichen eines Streufächers einer Schleuderscheibe aus der Bearbeitungskarte ein Sollwert zugeordnet werden und durch das Steuersystem die Einstellparameter für die jeweilige Schleuderscheibe derart gewählt werden, dass die den jeweiligen Bereichen zugeordnete Sollausbringmenge tatsächlich bestmöglich eingestellt wird.

Aus dem Stand der Technik ist lediglich bekannt für jede Schleuderscheibe individuell eine Ausbringmenge einzustellen, wie in Fig. 3 dargestellt. Dies ist sehr viel einfacher möglich, da die Einstellparameter, Aufgabepunkt, Drehzahl und Dosierschieberstellung hierbei pro Schleuderscheibe gewählt werden können und die Einstellparameter nicht aufwendig berechnet werden müssen, um die Ausbringmenge verschiedener Bereiche in dem Streufächer individuell anzupassen.

Da bei der Bearbeitung einer landwirtschaftlichen Fläche mit einem Schleuderstreuer typischerweise die pro Fläche ausgebrachte Menge Wirkstoff von Bedeutung ist, werden die Wendungen Ausbringmenge und Ausbringmenge pro Fläche sowie Ausbringrate hier synonym verwendet. Typischerweise wird hierfür beispielsweise bei höherer Fahrgeschwindigkeit der Dosierschieber weiter geöffnet, um die pro Fläche ausgebrachte Wirkstoffmenge konstant zu halten.

## Patentansprüche

1. Steuersystem zur Steuerung eines Schleuderstreuers zur Ausbringung von landwirtschaftlichem Gut, vorzugsweise Dünger, wobei das Gut mittels zumindest zwei Schleuderscheiben in Breitverteilung ausgebracht wird, wobei die auszubringende Menge des Guts mittels eines Dosierorgans, vorzugsweise eines Dosierschiebers, in regelbarer Weise den Schleuderscheiben zuführbar ist, wobei vorzugsweise zudem der Aufgabepunkt des Düngers auf die zumindest eine Schleuderscheibe in regelbarer Weise anpassbar ist, wobei vorzugsweise zudem die Drehzahl der Schleuderscheiben regelbar ist, wobei die Position des Schleuderstreuers durch Zugriff auf ein Positionserfassungssystem durch das Steuersystem ermittelbar ist, wobei Bearbeitungskarten an das Steuersystem übergebbar und/oder durch dieses auslesbar sind, wobei die Bearbeitungskarten die ortsspezifischen Sollausbringmengen umfassen, wobei der Streubereich der beiden Schleuderscheiben jeweils in zumindest zwei Bereiche unterteilt ist, für welche die Ausbringmenge durch das Steuersystem zumindest annähernd individuell einstellbar ist, wobei die Position der Bereiche relativ zu dem Positionserfassungssystem in dem Steuersystem hinterlegt ist,
**dadurch gekennzeichnet, dass**
Einstellparameter zur Einstellung der Verteilcharakteristik des Schleuderstreuers, vorzugsweise die momentane Dosierschieberposition und/oder der momentane Aufgabepunkt und/oder die momentane Schleuderscheibendrehzahl, jeweils pro Schleuderscheibe in Abhängigkeit der an der aktuellen oder in Kürze erreichten Position der Bereiche in der Bearbeitungskarte hinterlegten Sollausbringmengen durch das Steuersystem berechnet werden.

2. Steuersystem nach Anspruch 1, **dadurch gekennzeichnet, dass** die Sollausbringmengen an den aktuellen Positionen der jeweiligen Bereiche aus der Bearbeitungskarte durch das Steuersystem ausgelesen und mittels eines in dem Steuersystem hinterlegten Algorithmus, vorzugsweise Mittelwertbildung, die Sollausbringmengen an den Positionen der jeweiligen Bereiche pro Schleuderscheibe durch das Steuersystem zur Berechnung der Einstellparameter kombiniert werden.

3. Steuersystem nach Anspruch 1 oder 2, **dadurch gekennzeichnet, dass** die Bereiche mit einem Gewichtungsfaktor versehen und bei der Berechnung der Einstellparameter durch das Steuersystem somit verschiedentlich gewichtet werden.

4. Steuersystem nach zumindest einem der Ansprüche 1 bis 3, **dadurch gekennzeichnet, dass** zur Berechnung der Sollausbringmenge, die dem jeweiligen Bereich zugeordnet wird, alle in der Bearbeitungskarte innerhalb der aktuellen Position des Bereiches hinterlegten Werte für die Sollausbringmenge durch das Steuersystem gemittelt werden.

5. Steuersystem nach zumindest einem der Ansprüche 1 bis 4, **dadurch gekennzeichnet, dass** weitere Einstellparameter, wie die Anbauhöhe des Schleuderstreuers und/oder die Neigung des Schleuderstreuers anhand der aus der Bearbeitungskarte ermittelten Sollausbringmengen gesteuert werden.

6. Verfahren zur Steuerung eines Schleuderstreuers zur Ausbringung von landwirtschaftlichem Gut, wobei das Gut mittels zumindest zwei Schleuderscheiben in Breitverteilung ausgebracht wird, wobei die auszubringende Menge des Guts mittels eines Dosierorgans, vorzugsweise eines Dosierschiebers, in regelbarer Weise den Schleuderscheiben zuführbar ist, wobei vorzugsweise zudem der Aufgabepunkt des Düngers auf die zumindest eine Schleuderscheibe in regelbarer Weise anpassbar ist, wobei vorzugsweise zudem die Drehzahl der Schleuderscheiben regelbar ist, wobei die Position des Schleuderstreuers durch Zugriff auf ein Positionserfassungssystem ermittelbar ist, wobei Bearbeitungskarten angelegt sind, wobei die Bearbeitungskarten die ortsspezifischen Sollausbringmengen umfassen, wobei der Streubereich der beiden Schleuderscheiben jeweils in zumindest zwei Bereiche unterteilbar ist, für welche die Ausbringmenge jeweils zumindest annähernd individuell einstellbar ist, wobei die Position der Bereiche relativ zu dem Positionserfassungssystem bestimmbar ist,
**dadurch gekennzeichnet, dass**
Einstellparameter zur Einstellung der Verteilcharakteristik des Schleuderstreuers, vorzugsweise die momentane Dosierschieberposition und/oder der momentane Aufgabepunkt und/oder die momentane Schleuderscheibendrehzahl, jeweils pro Schleuderscheibe in Abhängigkeit der an der aktuellen Position der Bereiche in der Bearbeitungskarte hinterlegten Sollausbringmengen berechnet werden.

7. Verfahren nach Anspruch 5, **dadurch gekennzeichnet, dass** die Sollausbringmengen an den aktuellen Positionen der jeweiligen Bereiche aus der Bearbeitungskarte ausgelesen und mittels Algorithmus, vorzugsweise Mittelwertbildung, die Sollausbringmengen an den Positionen der jeweiligen Bereiche pro Schleuderscheibe zur Berechnung der Einstellparameter kombiniert werden.

8. Verfahren nach Anspruch 5 oder 6, **dadurch gekennzeichnet, dass** die Bereiche mit einem Gewichtungsfaktor versehen und bei der Berechnung der Einstellparameter somit verschiedentlich gewichtet werden.

9. Verfahren nach zumindest einem der Ansprüche 5 bis 7, **dadurch gekennzeichnet, dass** zur Berechnung der Sollausbringmenge, die dem jeweiligen Bereich zugeordnet wird, alle in der Bearbeitungskarte innerhalb der aktuellen Position des Bereiches hinterlegten Werte für die Sollausbringmenge gemittelt werden.

10. Verfahren nach zumindest einem der Ansprüche 6 bis 9, **dadurch gekennzeichnet, dass** weitere Einstellparameter, wie die Anbauhöhe des Schleuderstreuers und/oder die Neigung des Schleuderstreuers anhand der aus der Bearbeitungskarte ermittelten Sollausbringmengen gesteuert werden.
